# EUROPÄISCHE PATENTSCHRIFT

(11) **EP 0 664 262 B1**
(45) Veröffentlichungstag und Bekanntmachung des Hinweises auf die Patenterteilung: **19.03.1997**
(21) Anmeldenummer: 95100986.9
(22) Anmeldetag: 25.01.1995
(51) Int. Cl.: B65G 47/00, B65G 47/38

(54) **Kipp-Förderelement für einen Stückgutförderer (Sorter)**
Tiltable conveyor part for an article conveyor (sorter)
Elément de transport basculant pour transporteur d'articles (trieuse)

(30) Priorität: 25.01.1994 DE 4401964; 09.02.1994 DE 4404084
(43) Veröffentlichungstag der Anmeldung: 26.07.1995
(73) Patentinhaber: Bernhard Beumer Maschinenfabrik KG, D-59269 Beckum (DE)
(72) Erfinder: Droste, Heinrich, Dipl.-Ing., D-64832 Babenhausen (DE); Pölling, Ludger, Dipl.-Ing., D-59329 Wadersloh (DE)
(74) Vertreter: Hoormann, Walter, Dr.-Ing.

(56) Entgegenhaltungen:
- EP-A- 0 341 789
- FR-A- 2 528 403
- US-A- 3 589 501

## Beschreibung

Die Erfindung betrifft ein Kipp-Förderelement für einen Stückgutförderer (Sorter) zum Sortieren von Stückgutteilen, dessen angetriebener, endloser Förderstrang aus einer Vielzahl von gelenkig miteinander verbundenen Kipp-Förderelementen besteht, mit einem Tragelement, welches eine in seiner normalen Förderstellung im Wesentlichen horizontale Tragfläche zur Aufnahme eines Stückgutteils aufweist, zwecks Abgabe des Stückgutteils an einer vorgegebenen Abgabestelle um eine zur Förderrichtung parallele Kippachse seitlich zu kippen ist, und welches Bestandteil eines vielgliedrigen Schubgelenkgetriebes mit einem zapfenförmigen Schubglied ist, welches an einem sich von der Unterseite des Tragelementes nach unten erstreckenden Ansatz befestigt ist, parallel Förderrichtung verläuft und in einem Vertikalschlitz einer das Tragelement an einer Führung des Sorters abstützenden Stützeinrichtung des Kipp-Förderelementes geführt ist.

Einem zum Sortieren von Stückgutteilen dienenden (und demgemäß in der Praxis und Literatur auch kurz als "Sorter" bezeichneten) Stückgutförderer der hier in Rede stehenden Gattung werden zu sortierende Stückgutteile an wenigstens einer Aufgabestelle (häufig jedoch auch an mehreren Aufgabestellen) so aufgegeben, daß sie jeweils auf der im Förderzustand im wesentlichen horizontalen Tragfläche eines Kipp-Förderelementes plaziert werden.

Wenn vor- oder nachstehend davon die Rede ist, daß die Tragfläche der Förderelemente im Förderzustand "im wesentlichen horizontal" ist, so soll dieses auch beinhalten, daß die Tragfläche ggf. schalenförmige gekrümmt oder abschnittsweise abgewinkelt ausgebildet sein kann.

Die wesentliche Aufgabe eines Sorters besteht darin, Stückgutteile jeweils an einer von mehreren seitlich zur Förderbahn angeordneten Abgabestationen abzugeben, um sie nach bestimmten Kriterien zu sortieren. Dieses kann bspw. bei Postpaketen eine Sortierung nach Postleitzahlen sein oder bei einem auf einem Flughafen eingesetzten Sorter eine Sortierung von aufgegebenen Gepäckstücken nach Flugzielorten. Hierfür werden die Stückgutteile vor ihrer Aufgabe auf den Sorter - i. a. mittels eines sog. Labels - mit einer Kodierung versehen, oder sie weisen von vornherein eine Kennung/Kennzeichnung auf, die von einer Leseeinrichtung lesbar ist, wobei die Kodierung im Bereich des Sorters einer bestimmten Abgabestelle zugeordnet ist, und durch bestimmte Einrichtungen dafür Sorge getragen wird, daß ein einer bestimmten Abgabestelle zugeordnetes Stückgutteil an dieser durch seitliches Kippen des Tragelementes abgegeben wird.

Um die gewünschte Abgabe eines Stückgutteils an einer bestimmten Ausschleusstelle zu verwirklichen, ist es an sich grundsätzlich möglich, ein Stückgutteil jeweils mit einem im wesentlichen quer zur (momentanen) Förderrichtung des Sorters verlaufenden, bspw. hydraulisch oder pneumatisch betriebenen Stempel od. dgl. von der (dabei im wesentlichen horizontal verbleibenden) Tragfläche des betreffenden Förderelementes seitlich abzuschieben. Eine solche Arbeitsweise ist jedoch insbesondere bei den heutzutage verwirklichten hohen Fördergeschwindigkeiten von Sortern, die bis zu 2 m/sec und mehr betragen, schon deshalb unbefriedigend, weil das Stückgut bei einer solchen Manipulation/Beaufschlagung stark beansprucht wird. Eine möglichst schonende Behandlung von Stückgutteilen wird jedoch praktisch für alle Einsatzfälle von Sortern in höchstem Maße gewünscht, insbesondere aber, wenn es sich bspw. um Sorter in Versandhäusern od. dgl. handelt, mittels welcher bestimmte Warenkommissionen zusammengestellt werden, und wenn diese aus relativ empfindlichen Stückgutteilen bestehen.

Es sind daher verschiedene Kipp-Förderelemente für Sorter entwickelt worden, bei denen das Tragelement an einer Ausschleusstelle jeweils um eine parallel zur Förderrichtung verlaufende Kippachse seitlich zu kippen ist.

So ist aus der DE-PS 36 02 861 ein Kipp-Förderelement bekanntgeworden, bei dem eine äußerst schonende Abgabe der Stückgutteile gewährleistet ist, wobei einem abzugebenden Stückgutteil jeweils beim Abgabevorgang über die Schwerkraftwirkung hinaus noch ein für eine schonende Abgabe zweckmäßiger Bewegungsablauf eingeprägt wird, was im wesentlichen dadurch erreicht wird, daß ein Lagerzapfen des Tragelementes beim Kippen gesteuert schwenkbar ist. Dabei ist der fest an der Unterseite des Tragelementes angeordnete, schräg nach unten gerichtete, drehbar gelagerte Lagerzapfen mit einem zapfenförmig ausgebildeten Stützelement durch ein Kardangelenk verbunden, wobei die rechtwinklig zur Längsachse des zapfenförmigen Stützelementes verlaufende eine Drehachse des Kardangelenkes in derjenigen Vertikalebene verläuft, in welcher die Längsachsen des Lagerzapfen und des zapfenförmigen Stützelementes im Förderzustand verlaufen.

Das aus der DE-PS 36 02 861 bekannte Kipp-Förderelement, hat sich in der Praxis zwar sehr bewährt, erfordert jedoch u. a. im Hinblick auf Kardangelenk einen erheblichen Aufwand.

Bei verschiedenen Anwendungsfällen ist es i. ü. auch wünschenswert, die maximale Durchsatzleistung des Sorters zu vergrößern, bzw. den erforderlichen Aufwand - bei gleicher Durchsatzleistung - zu verringern, und zwar dadurch, daß die Kipp-Förderelemente nicht - wie bisher dargelegt und i. a. üblich - jeweils nur mit einem einzigen Tragelement (bei einem Kippschalenförderer also einer einzigen Schale) ausgerüstet werden, sondern mit zwei spiegelsymmetrisch zur Sorter-Längsachse nebeneinander angeordneten Tragelementen, von denen das eine Tragelement jeweils an einer Abgabestation seitlich nach links und das andere Tragelement seitlich nach rechts zu kippen ist. Mit einem derart ausgebildeten Sorter, wie er bspw. aus der DE-AS 1 209 056 bekannt ist, ist die Durchsatzleistung ersichtlich gegenüber konventionellen Sortern, deren Kipp-Förderelemente jeweils nur mit einem einzigen Tragelement ausgerüstet sind, etwa zu verdoppeln.

Nun sind aber auch die bspw. aus der vorgenannten DE-AS 1 209 056 bekannten Kipp-Förderelemente dieser Ausgestaltung, die nachstehend auch als "Tandem-Kipp-Förderelemente" bezeichnet werden, bisher noch unbefriedigend, weil auch ihre Kippmechanismen einen erheblichen Aufwand erforderlich machen.

Aus der DE-PS 35 11 936 ist ein Kipp-Förderelement der eingangs beschriebenen Gattung bekannt, dessen Tragelement unter getriebetechnischen Gesichtspunkten Bestandteil eines vielgliedrigen Schubgelenkgetriebes ist. Dieses bekannte Kipp-Förderelement weist nämlich zwei jeweils zweigliedrige, in Förderrichtung gesehen spiegelsymmetrisch zur Mittelachse angeordnete Kniehebel auf, die jeweils an ihrem oberen Ende an einem sich von der Unterseite des Tragelementes nach unten erstreckenden Ansatz und an ihrem unteren Ende an einem Tragglied der Stützeinrichtung angelenkt sind, wobei die oberen Kniehebelglieder im normalen Förderzustand jeweils an einem Anschlag anliegen und am unteren Ende der Kniehebel jeweils ein Stellhebel angeordnet ist, und wobei zum Kippen des Tragelementes zur einen oder anderen Seite einer der Stellhebel von einem Steuerglied zu beaufschlagen ist. Dieses bewirkt, daß die beiden hebelartigen Glieder des betreffenden Kniehebels durch das sie verbindende Gelenk zur Seite ausgeschwenkt werden und sich unter Kippen des Tragelementes nach unten absenken.

Außerdem weist dieses bekannte Kipp-Förderelement ein zapfenförmiges Schubglied auf, welches an dem sich von der Unterseite des Tragelementes nach unten erstreckenden Ansatz (Schalensockel) befestigt ist, parallel zur Förderrichtung verläuft, und in einem Vertikalschlitz der Stützeinrichtung des Kipp-Förderelements geführt ist, wobei das zapfenförmige Schubglied in der normalen Förderstellung des Kipp-Förderelementes an einer Feder abgestützt ist und sich beim Kippen des Tragelementes in dem Vertikalschlitz nach unten absenkt. Dabei bildet mithin das Tragelement unter getriebemäßigen Gesichtspunkten ein zwischen den beiden oberen Gelenken der Kniehebel liegendes Zwischenglied, so daß es sich insgesamt um ein sechsgliedriges Schubgelenkgetriebe handelt, da der jeweils entgegen der Kippseite angeordnete zweigliedrige Kniehebel beim Kippen mitwirkt und demgemäß Bestandteil des gesamten Schubgelenkgetriebes ist. Obwohl bzgl. ihres Kippmechanismusses als Schubgelenkgetriebe ausgebildete Kipp-Förderelemente gegenüber anderen Ausgestaltungen durchaus gewisse Vorteile aufweisen können, ist diese bekannte Kipp-Förderelement wegen seiner Vielgliedrigkeit und des damit verbundenen Aufwandes nachteilig.

Der vorliegenden Erfindung liegt die Aufgabe zugrunde, das gattungsgemäße Kipp-Förderelement unter Aufrechterhaltung seiner funktionellen Vorteile erheblich zu vereinfachen und damit nicht nur entsprechend zu verbilligen, sondern außerdem weniger störanfällig zu machen.

Die Lösung dieser Aufgabe besteht erfindungsgemäß darin, daß das Kipp-Förderelement als viergliedriges Schubgelenkgetriebe mit zwei Schubgliedern ausgebildet ist, wobei der nach unten gerichtete Ansatz des Tragelementes über das zapfenförmige (erste) Schubglied hinaus nach unten verlängert ist und an seinem unteren Endabschnitt an zweites Schubglied angelenkt ist, welches in einer rechtwinklig zur Förderrichtung angeordneten, im wesentlichen horizontalen Querführung der Stützeinrichtung des Kippförderelementes geführt ist, wobei die anderen beiden Glieder des Schubgelenkgetriebes durch die Stützeinrichtung einerseits bzw. den Verlängerungsabschnitt des Ansatzes des Tragelementes andererseits gebildet werden an dem das Tragelement gehalten ist, wobei das zweite Schubglied in der normalen Förderstellung des Tragelementes mittels eines Verriegelungsmittels verriegelt ist, welches an der vorgegebenen Abgabestelle durch eine dort vorgesehene externe Entriegelungs- und Steuereinrichtung zu entriegeln ist, und wobei das zweite Schubglied mittels der Entriegelungs- und Steuereinrichtung in der Querführung zu verschieben ist.

Bevorzugt ist der nach unten gerichtete Ansatz des Tragelementes als Tragsäule mit einem im wesentlichen konstanten Querschnitt ausgebildet, die sich im allgemeinen mittig von der Unterseite des Tragelementes nach unten erstreckt.

Die seitliche Verschiebung des zweiten Schubgliedes, welches bevorzugt blockförmig ausgebildet ist - wobei die Querführung einen entsprechenden Querschnitt aufweist -, ist bevorzugt durch einen Anschlag begrenzt, wobei dieser durch das untere Ende des Vertikalschlitzes gebildet sein kann, in dem das erste Schubglied geführt ist.

Das Verriegelungsmittel zum Verriegeln des zweiten Schubgliedes in der normalen Förderstellung des Kipp-Förderelementes ist bevorzugt an wenigstens einem freien Endabschnitt des zweiten Schubgliedes angeordnet.

Bevorzugte Ausgestaltungen der vorliegenden Erfindung sind in Unteransprüchen beschrieben.

Die Erfindung ist nachstehend an Ausführungsbeispielen unter Bezugnahme auf eine Zeichnung weiter erläutert. Es zeigt:
- Fig. 1: einen quer zur Förderrichtung verlaufenden Querschnitt durch ein erfindungsgemäßes Kipp-Förderelement für einen Sorter;
- Fig. 2: eine Seitenansicht des Kipp-Förderelementes gemäß Fig. 1 in Richtung des
Pfeiles II in Fig. 1, wobei Gehäuseteile u. dgl. weggeschnitten sind;
- Fig. 3: einen vertikalen Längsschnitt durch das Kipp-Förderelement gemäß den Fig. 1 und 2 in Richtung der Schnittlinie III-III in Fig. 1 gesehen;
- Fig. 4: eine Draufsicht auf das Kipp-Förderelement der Fig. 1 bis 3 von unterhalb des Tragelementes - also gemäß den Pfeilen IV-IV in Fig. 1 - gesehen;
- Fig. 5: eine Einzelheit des Kipp-Förderelementes gemäß den Fig. 1 bis 4, nämlich einen (der zwei vorhandenen) Stößel;
- Fig. 6: eine Prinzipskizze des erfindungsgemäßen Kipp-Förderelementes, welche dessen Ausgestaltung als viergliedriges Schubgelenkgetriebe mit zwei Schubgliedern verdeutlicht;
- Fig. 7: ein Ausführungsbeispiel eines mit zwei Tragelementen versehenen Kipp-Förderelementes in einer Darstellung gemäß Fig. 1;
- Fig. 8: eine Seitenansicht eines Tragelementes des Kipp-Förderelementes gemäß Fig. 7 in Richtung des Pfeiles VIII in Fig. 7 gesehen;
- Fig. 9: eine Schnittdarstellung des Kipp-Förderelementes (ohne Tragelemente) gemäß Fig. 7 in Richtung der Schnittlinie IX-IX in Fig. 7 gesehen; und
- Fig. 10: unten eine Teildraufsicht auf das Kipp-Förderelement gemäß den Fig. 7-9 und oben einen Teilschnitt im Bereich des zweiten Schubgliedes gemäß der Schnittlinie X-X in Fig. 7 (jeweils ohne Tragelement).

Die Zeichnung zeigt ein im ganzen mit 1 bezeichnetes (erfindungsgemäßes) Kipp-Förderelement für einen Stückgutförderer in der Art und Funktion eines Sorters, der im übrigen - da er der Fachwelt grundsätzlich hinlänglich bekannt ist - nicht gesondert dargestellt ist.

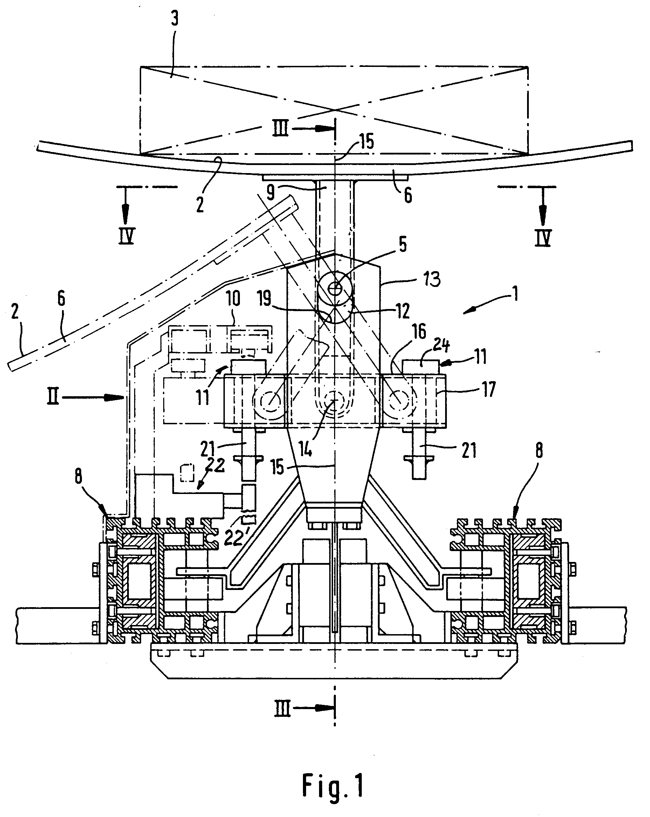

Der nachstehend der Einfachheit halber auch als Sorter bezeichnete Stückgutförderer weist einen angetriebenen, endlosen Förderstrang auf, der aus einer Vielzahl von gelenkig miteinander verbundenen Kipp-Förderelementen 1 besteht, die jeweils ein Tragelement 6 aufweisen, auf dessen im Förderzustand horizontaler Tragfläche 2 jeweils (wenigstens) ein Stückgutteil 3 (bzw. ein Abschnitt eines Stückgutteils 3) anzuordnen ist, wie es in Fig. 1 (mit strichpunktierten Linien) angedeutet (und in den übrigen Figuren der besseren Übersicht halber fortgelassen) ist.

Ein sich auf der Tragfläche 2 des Kipp-Förderelementes 1 befindliches Stückgutteil 3 kann durch seitliches Kippen des Tragelementes 6 um eine parallel zur momentanen Förderrichtung 4 verlaufende Kippachse an einer von mehreren in der Zeichnung nicht im einzelnen dargestellten, längs der Förderstrecke vorgesehenen Abgabestationen seitlich zur Förderrichtung 4 abgegeben werden.

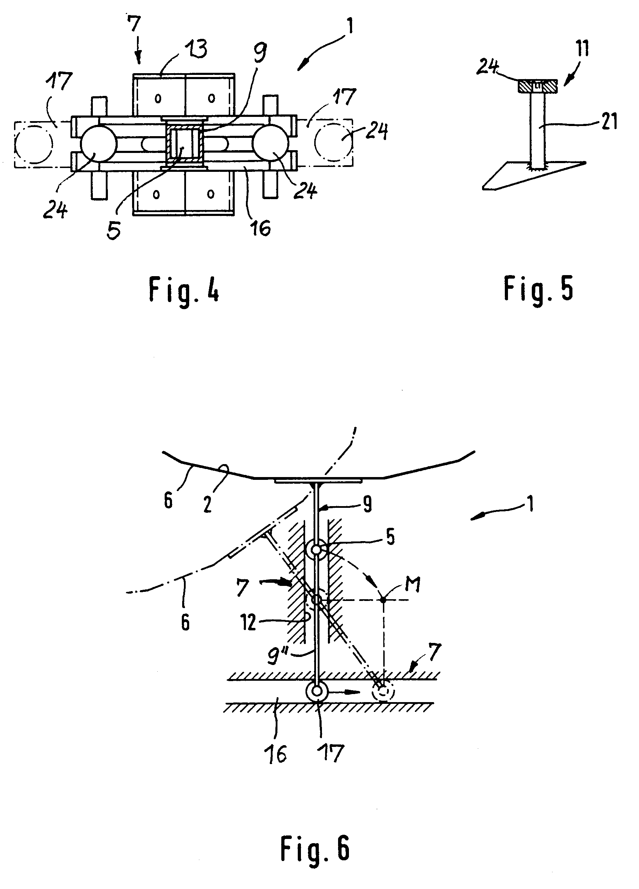

Diese Kippachse liegt bei dem in Fig. 1 mit ausgezogenen Linien dargestellten normalen Förderzustand in der Achse eines ersten zapfenförmigen Schubgliedes 5, welches an einem sich von der Unterseite des Tragelementes 6 nach unten erstreckenden Ansatz 9 befestigt ist, und parallel zur Förderrichtung 4 verläuft. Während des Kippvorganges verlagert sich die tatsächliche Kippachse, die durch den jeweiligen sogenannten Momentanpol M des Schubgelenkgetriebes verläuft, auf einem Kreisbogen nach außen (s. Fig. 6, in welcher das Momentanpol M für die Kipp-Endstellung angedeutet ist). Das zapfenförmige erste Schubglied 5 steht beiderseits des als Tragsäule 9 ausgebildeten Ansatzes des Tragelementes 6 vor und ist in einem Vertikalschlitz 12 einer das Tragelement 6 an einer Schienenführung 8 abstützenden, im ganzen mit 7 bezeichneten Stützeinrichtung geführt, die u. a. ein Gehäuse 13 aufweist, in dem sich der Vertikalschlitz 12 befindet.

Die Tragsäule 9 ist über das zapfenförmige erste Schubglied 5 hinaus mit einem Abschnitt 9'' nach unten verlängert und an ihrem unteren Endabschnitt bei 14 an ein zweites Schubglied 17 angelenkt, welches an einer rechtwinklig zur Förderrichtung 4 angeordneten, horizontalen Querführung 16 der Stützeinrichtung 7 geführt ist. Das zweite Schubglied 17 ist blockförmig ausgebildet, wobei die Querführung 16 einen entsprechenden Querschnitt aufweist.

Wie insbesondere aus der Schemazeichnung gemäß Fig. 6 deutlich wird, werden die anderen beiden Glieder des Schubgelenkgetriebes (also außer den beiden Schubgliedern 5, 17), durch die insgesamt mit 7 bezeichnete Stützeinrichtung (genauer gesagt deren den Vertikalschlitz 12 aufweisenden Teil) einerseits bzw. den Abschnitt 9'' der Tragsäule 9 (und das an dieser befestigte Tragelement 6) gebildet, wobei das Tragelement 6 nicht unmittelbar ein Schubgelenkglied bildet, sondern an einem solchen angeordnet ist.

Das blockförmig ausgebildete zweite Schubglied 17 ist in der normalen Förderstellung des Tragelementes 6 an seinen beiden Enden jeweils mittels eines Verriegelungsmittels 11 verriegelt. Die Verriegelungsmittel 11 weisen jeweils einen als Stößel 21 ausgebildeten Verriegelungsbolzen auf, der in einer vertikalen Durchgangsöffnung des zweiten Schubgliedes 17 vertikal geführt ist und einen verdickten Kopf 24 aufweist, der im abgesenkten Zustand des Verriegelungsbolzens 21 in einer entsprechenden Ausnehmung der die Querführung 16 aufweisenden Stützeinrichtung 7 formschlüssig gehalten ist. Der Verriegelungsbolzen 21 ist an der vorgesehenen Abgabestelle, an welcher das Stückgutteil 3 seitlich abgegeben werden soll, mittels eines Entriegelungsmittels 22, wie es in Fig. 1 der Einheit halber nur auf der linken Seite dargestellt ist, in eine Stellung anzuheben, in welcher sein Kopf 24 mit der Stützeinrichtung 7 außer Eingriff kommt, wie dieses in Fig. 1 mit strichpunktierten Linien angedeutet ist, so daß das zweite Schubglied 17 zu der entriegelten Seite hin in der Querführung 16 beweglich ist. Dieses ist trotz des auf der anderen Seite befindlichen Verriegelungsbolzens 11 möglich, da die Köpfe 24 im abgesenkten Zustand nur jeweils gegen eine Bewegung nach außen formschlüssig gehalten sind, nicht aber gegen eine Bewegung nach innen. Das Entriegelungsmittel 22 weist einen Nocken 22' auf, der um eine Horizontalachse so zu drehen ist, daß er den Stößel 21 anhebt.

Wird ein Verriegelungsbolzen 21 aus seiner abgesenkten Verriegelungsstellung durch das als steuerbaren Nocken 22 ausgebildete Entriegelungsmittel angehoben, so gelangt sein Kopf 24 in eine in seinem Bewegungspfad befindliche Weiche 10, wie sie in Fig. 1 mit strichpunktierten Linien schematisch angedeutet ist, und wird bei der weiteren Fortbewegung des Kipp-Förderelementes 1 von der weiche 10 formschlüssig nach außen geführt, wobei über den Stößel 21 das zweite Schubglied 17 in dessen Querführung 16 nach außen mitbewegt wird, so daß es zu einem Kippen des Tragelementes 6 kommt. Dabei kippt das Tragelement 6 in Fig. 1 nach rechts, wenn der entriegelte linke Stößel 21 von dem Entriegelungsmittel 22 angehoben wird, und sein Kopf 24 von der zugeordneten Weiche 10 nach außen bewegt wird. In der in Fig. 1 gezeichneten Kippstellung des Tragelementes 6 ist dagegen der rechte Stößel 21 von einem der Einfachheit halber nicht dargestellten Entriegelungsmittel 22 angehoben und mit seinem Kopf 24 in eine ebenfalls nicht dargestellte weiche 10 geführt worden, so daß das zweite Schubglied 17 dabei aus seiner mittleren Stellung nach rechts bewegt worden ist. Die Köpfe 24 der Stößel 21 sind zweckmäßigerweise als Rollen ausgebildet, die jeweils um die Längsachse des betreffenden Stößels 21 drehbar sind, damit die Reibung in der betreffenden weiche 10 gering ist.

In der Kipp-Endstellung liegt das zapfenförmige erste Schubglied 5 an einem vom unteren Ende des Vertikalschlitzes 12 gebildeten Anschlag 19 an, so daß die Kippbewegung auch außerhalb der weiche 10 begrenzt ist. Diese führt den Kopf des betreffenden Stößels 21 im übrigen nach dem Abgeben des Stückgutteils in entsprechender weise wieder zurück, wobei das zweite Schubglied 17 in seine mittlere Normalstellung zurückgeführt und damit das Tragelement 6 wieder aufgerichtet wird, wobei der Kopf 24 des Stößels 21 bei Erreichen dieser Stellung von der weiche 10 nicht mehr gehalten wird, so daß er wiederum in seine Verriegelungsstellung absinkt.

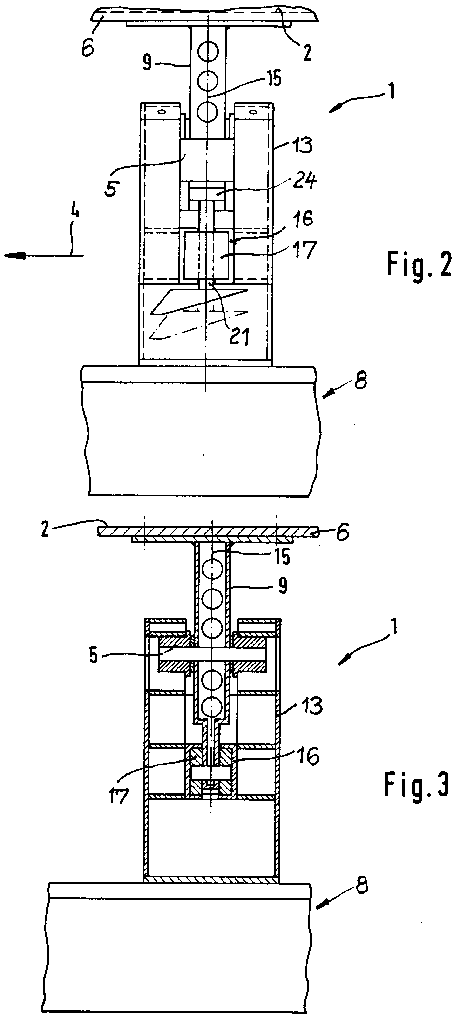

Die Fig. 2 bis 5 zeigen verschiedene Schnittansichten und Einzelheiten des Kipp-Förderelementes gemäß Fig. 1.

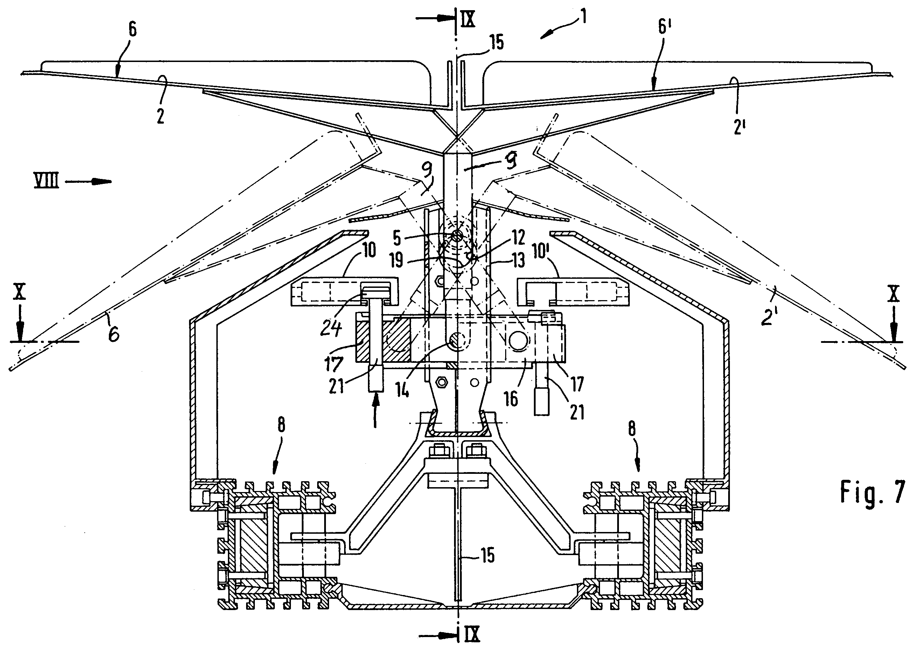

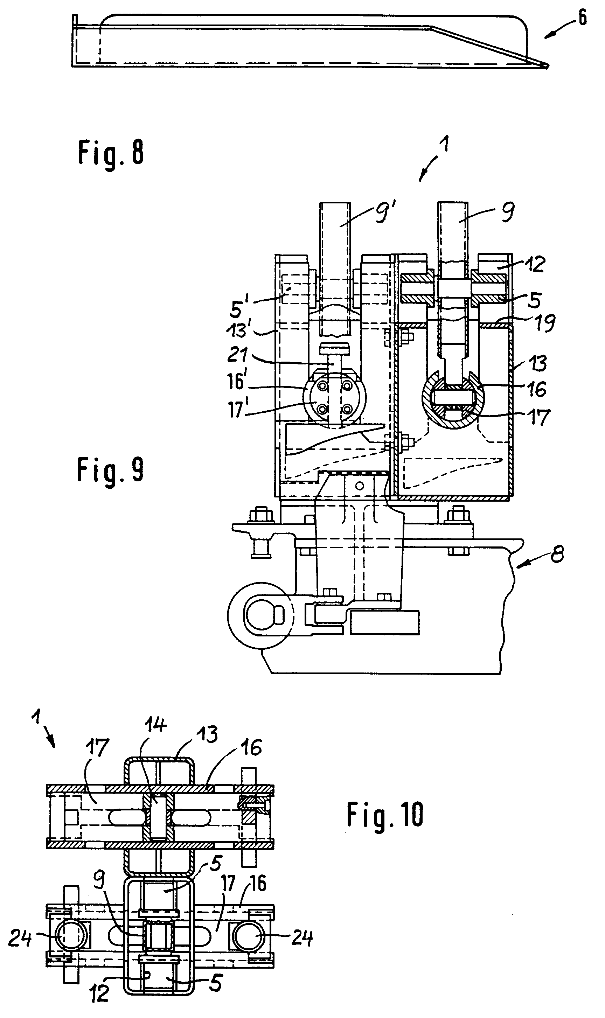

Fig. 7 zeigt in einer Querschnittsdarstellung gemäß Fig. 1 die Anwendung der vorliegenden Erfindung bei einem Sorter mit Tandem-Kipp-Förderelementen, die jeweils zwei spiegelsymmetrisch zur Längsachse des Sorters nebeneinander angeordnete Tragelemente 6 bzw. 6' aufweisen, von denen das eine Tragelement nach links und das andere nach rechts abzukippen ist, und die Fig. 8-10 zeigen Einzelheiten einer solchen Ausgestaltung. Es ist ersichtlich, daß das erfindungsgemäße Gestaltungsprinzip auch bei einer derartigen Sorterausbildung ohne weiteres zu verwirklichen ist und zu einem relativ einfachen, robusten und entsprechend betriebsicheren Kippmechanismus führt, wobei bzgl. der Konstruktions- und Funktionsweise auf die Ausführungen zu dem Ausführungsbeispiel gemäß den Fig. 1 bis 5 verwiesen und lediglich angemerkt wird, daß bei einer derartigen Tandemausführung zwei derartiger Einheiten in Förderrichtung unmittelbar hintereinander angeordnet und im Bereich ihrer Gehäuse 13, 13' miteinander verbunden sein können, wie aus Fig. 9 hervorgeht.

Die vorliegende Erfindung schafft mithin ein gattungsgemäßes Kipp-Förderelement, welches durch das vorgesehene zweite Schubglied mit insgesamt lediglich vier Gliedern für das vorliegende Schubgelenkgetriebe auskommt und demgemäß mit entsprechend wenigen Bauteilen zu realisieren ist, so daß es nicht nur entsprechend preiswert zu erstellen, sondern auch entsprechend robust und betriebssicher ist, wobei das Kipp-Förderelement dennoch wahlweise beidseitig zu kippen ist, aber auch für bspw. bei Tandem-Kipp-Förderelementen vorliegende Einsatzfälle verwendbar ist, bei denen lediglich ein einseitiges Kippen erforderlich ist.

## Patentansprüche

1. Kipp-Förderelement (1) für einen Stückgutförderer (Sorter) zum Sortieren von Stückgutteilen (3), dessen angetriebener, endloser Förderstrang aus einer Vielzahl von gelenkig miteinander verbundenen Kipp-Förderelementen (1) besteht, mit einem Tragelement (6), welches eine in seiner normalen Förderstellung im wesentlichen horizontale Tragfläche (2) zur Aufnahme eines Stückgutteils (3) aufweist, zwecks Abgabe des Stückgutteils (3) an einer vorgegebenen Abgabestelle um eine zur Förderrichtung (4) parallele Kippachse seitlich zu kippen ist, und welches Bestandteil eines vielgliedrigen Schubgelenkgetriebes (5, 7, 9'', 17) mit einem zapfenförmigen Schubglied (5) ist, welches an einem sich von der Unterseite des Tragelementes (6) nach unten erstreckenden Ansatz (9) befestigt ist, parallel zur Förderrichtung (4) verläuft und in einem Vertikalschlitz (12) einer das Tragelement (6) an einer Führung (8) abstützenden Stützeinrichtung (7) des Kipp-Förderelementes (1) geführt ist, dadurch gekennzeichnet, daß das Kipp-Förderelement (1) als viergliedriges Schubgelenkgetriebe mit zwei Schubgliedern (5, 17) ausgebildet ist, wobei der nach unten gerichtete Ansatz (9) des Tragelementes (6) über das zapfenförmige (erste) Schubglied (5) hinaus mit einem Abschnitt (9'') nach unten verlängert ist und an seinem unteren Endabschnitt (bei 14) an ein zweites Schubglied (17) angelenkt ist, welches in einer rechtwinklig zur Förderrichtung (4) angeordneten, im wesentlichen horizontalen Führung (16) der Stützeinrichtung (7) geführt ist, wobei die anderen beiden Glieder des Schubgelenkgetriebes durch die Stützeinrichtung (7) einerseits bzw. den verlängerten Abschnitt (9'') des Ansatzes (9) andererseits gebildet werden, an dem das Tragelement (6) gehalten ist, wobei das zweite Schubglied (17) in der normalen Förderstellung des Tragelementes (6) mittels eines Verriegelungsmittels (11) verriegelt ist, welches an der vorgegebenen Abgabestelle durch eine dort vorgesehene Entriegelungs- und Steuereinrichtung (22, 10) zu entriegeln ist, und wobei das entriegelte zweite Schubglied (17) mittels eines Steuermittels (10) in der Querführung (16) seitlich zu verschieben ist.

2. Kipp-Förderelement nach Anspruch 1, dadurch gekennzeichnet, daß der nach unten gerichtete Ansatz (9) des Tragelementes (6) als Tragsäule mit einem im wesentlichen konstanten Querschnitt ausgebildet ist.

3. Kipp-Förderelement nach Anspruch 1 oder 2, dadurch gekennzeichnet, daß das zweite Schubglied (17) blockförmig ausgebildet ist, wobei die Querführung (16) einen entsprechenden Querschnitt aufweist.

4. Kipp-Förderelement nach einem oder mehreren der vorhergehenden Ansprüche, dadurch gekennzeichnet, daß die seitliche Verschiebung des zweiten Schubgliedes (17) durch einen Anschlag (19) begrenzt ist.

5. Kipp-Förderelement nach Anspruch 4, dadurch gekennzeichnet, daß der Anschlag (19) durch das untere Ende des Vertikalschlitzes (12) gebildet ist.

6. Kipp-Förderelement nach einem oder mehreren der vorhergehenden Ansprüche, dadurch gekennzeichnet, daß das zweite Schubglied (17) im normalen Förderzustand des Tragelementes (6) mit wenigstens einem Verriegelungsmittel (11) lösbar zu verriegeln ist.

7. Kipp-Förderelement nach Anspruch 6, dadurch gekennzeichnet, daß das Verriegelungsmittel (11) aus einem am freien Endabschnitt des zweiten Schubgliedes (17) angeordneten Verriegelungsbolzen (21) besteht, der in einer vertikalen Durchgangsöffnung des zweiten Schubgliedes (17) vertikal geführt ist und einen verdickten Kopf (24) aufweist, der im abgesenkten Zustand des Verriegelungsbolzens (21) in einer entsprechenden Ausnehmung der die Querführung (16) aufweisenden Stützeinrichtung (7) formschlüssig gehalten ist, und der mittels des Entriegelungsmittels (22) in eine Stellung anzuheben ist, in welcher er mit der Stützeinrichtung (7) außer Eingriff ist.

8. Kipp-Förderelement nach Anspruch 7, dadurch gekennzeichnet, daß der Kopf (24) des mittels des Entriegelungsmittels (22) angehobenen Verriegelungsbolzens (21) an einer Abgabestelle mittels des Steuermittels (10) in Eingriff kommt, und unter Mitnahme des zweiten Schubgliedes (17) seitlich nach außen zu bewegen ist.

9. Kipp-Förderelement nach Anspruch 6 oder 7, dadurch gekennzeichnet, daß an beiden freien Endabschnitten des zweiten Schubgliedes (17) ein Verriegelungsmittel (11) angeordnet ist.

## Claims

1. Tipping-conveying element (1) for a piece goods conveyor (sorter) for the purpose of sorting items of piece goods (3), wherein the driven, continuous conveying track of the piece goods conveyor consists of a plurality of tipping-conveying elements (1) which are mutually connected in an articulated manner, the said tipping-conveying element having a bearing element (6) which comprises a bearing surface (2) which is substantially horizontal in its normal conveying position in order to receive an item of piece goods (3), which bearing element for the purpose of discharging the item of piece goods (3) at a predetermined discharge site is to tip sidewards about a tipping axis in parallel with the conveying direction (4) and which bearing member is a component of a multi-member thrust joint gearing (5, 7, 9'', 17) having a spigot-shaped thrust member (5) which is attached to a projection (9) which extends downwards from the lowerside of the bearing element (6), extends in parallel with the conveying direction (4) and is guided in a vertical slot (12) of a supporting device (7) of the tipping-conveying element (1), the said supporting device supporting the bearing element (6) at a guide (8), characterised in that the tipping-conveying element (1) is designed as a four-member thrust joint gearing having two thrust members (5, 17), wherein the downwards directed projection (9) of the bearing element (6) is lengthened downwards beyond the spigot-shaped (first) thrust member (5) by a portion (9'') and is articulated at its lower end portion (at 14) to a second thrust member (17) which is guided in a substantially horizontal guide (16) of the supporting device (7), the said horizontal guide being disposed at a right-angle to the conveying direction (4), wherein the two other members of the thrust joint gearing are formed by the supporting device (7) on the one hand and by the lengthened portion (9'') of the projection (9) on the other hand, at which the bearing element (6) is held, wherein the second thrust member (17) in the normal conveying position of the bearing element (6) is locked by means of a locking means (11) which is to be unlocked at the predetermined discharge site by means of an unlocking and control device (22, 10) provided at the said discharge site and wherein the unlocked second thrust member (17) is displaced sidewards by means of a control means (10) in the transverse guide (16).

2. Tipping-conveying element according to claim 1, characterised in that the downwards directed projection (9) of the bearing element (6) is designed as a bearing column having a substantially constant cross-section.

3. Tipping-conveying element according to claim 1 or 2, characterised in that the second thrust member (17) is block-shaped, wherein the transverse guide (16) comprises a corresponding cross-section.

4. Tipping-conveying element according to any one or several of the preceding claims, characterised in that the sidewards displacement of the second thrust member (17) is limited by a stop (19).

5. Tipping-conveying element according to claim 4, characterised in that the stop (19) is formed by means of the lower end of the vertical slot (12).

6. Tipping-conveying element according to any one or several of the preceding claims, characterised in that the second thrust member (17) in the normal conveying state of the bearing element (6) is releasably locked by means of at least one locking means (11).

7. Tipping-conveying element according to claim 6, characterised in that the locking means (11) consists of a locking pin (21) which is disposed at the free end portion of the second thrust member (17) and is guided vertically in a vertical through-going orifice of the second thrust member (17) and comprises an enlarged head (24) which in the lowered state of the locking pin (21) is held in a positive-locking manner in a corresponding recess of the supporting device (7) which comprises the transverse guide (16) and which can be raised by means of the unlocking means (22) into a position in which the said head is disengaged from the supporting device (7).

8. Tipping-conveying element according to claim 7, characterised in that the head (24) of the locking pin (21) raised by means of the unlocking means (22) comes into engagement at a discharge site by means of the control means (10) and is moved sidewards towards the outside whilst entraining the second thrust member (17).

9. Tipping-conveying element according to claim 6 or 7, characterised in that a locking means (11) is disposed at the two free end portions of the second thrust member (17).

## Revendications

1. Elément transporteur basculant (1) qui est destiné à un transporteur (trieur) de marchandises de détail pour trier des marchandises (3) et dont la chaîne transporteuse entraînée et sans fin est constituée de multiples éléments transporteurs basculants (1) liés entre eux de manière articulée, avec un élément porteur (6) qui comporte une surface porteuse (2) globalement horizontale dans sa position normale de transport et destinée à recevoir une marchandise (3), qui doit être basculé latéralement autour d'un axe de basculement parallèle à la direction de transport (4) afin de délivrer la marchandise (3) à un poste distributeur prédéterminé, et qui fait partie d'un mécanisme de joint à glissière (5, 7, 9'', 17) à plusieurs éléments avec un baladeur (5) en forme de tourillon qui est fixé à une pièce longue (9) s'étendant vers le bas depuis le dessous de l'élément porteur (6), qui s'étend parallèlement à la direction de transport (4) et qui est guidé dans une fente verticale (12) d'un dispositif de support (7), soutenant l'élément porteur (6) sur un guide (8), de l'élément transporteur basculant (1), caractérisé par le fait que l'élément transporteur basculant (1) est construit comme un mécanisme de joint à glissière à quatre éléments comportant deux baladeurs (5, 17), la pièce longue (9), dirigée vers le bas, de l'élément porteur (6) étant prolongée vers le bas par un tronçon (9'') au-delà du (premier) baladeur (5) en forme de tourillon et étant articulée au niveau de son extrémité inférieure (à 14) avec un second baladeur (17) qui est guidé dans un guide (16), disposé perpendiculairement à la direction de transport (4) et globalement horizontal, du dispositif de support (7), les deux autres éléments du mécanisme de joint à glissière étant formés d'une part par le dispositif de support (7) et d'autre part par le tronçon prolongé (9'') de la pièce longue (9) auquel l'élément porteur (6) est fixé, le second baladeur (17) étant bloqué dans la position normale de transport de l'élément porteur (6) à l'aide d'un moyen de blocage (11) qui est à débloquer au niveau du poste distributeur prescrit par un dispositif de déblocage et de commande (22, 10) prévu à cet endroit, et le second baladeur (17) débloqué étant à déplacer latéralement dans le guide transversal (16) à l'aide d'un moyen de commande (10).

2. Elément transporteur basculant selon la revendication 1, caractérisé par le fait que la pièce longue (9), dirigée vers le bas, de l'élément porteur (6) est construite sous forme de colonne porteuse avec une section globalement constante.

3. Elément transporteur basculant selon la revendication 1 ou 2, caractérisé par le fait que le second baladeur (17) est construit sous forme de bloc, le guide transversal (16) ayant une section correspondante.

4. Elément transporteur basculant selon une ou plusieurs des revendications précédentes, caractérisé par le fait que le déplacement latéral du second baladeur (17) est limité par une butée (19).

5. Elément transporteur basculant selon la revendication 4, caractérisé par le fait que la butée (19) est formée par l'extrémité inférieure de la fente verticale (12).

6. Elément transporteur basculant selon une ou plusieurs des revendications précédentes, caractérisé par le fait que, lorsque l'élément porteur (6) est dans l'état normal de transport, le second baladeur (17) doit être bloqué, de manière à rester amovible, par au moins un moyen de blocage (11).

7. Elément transporteur basculant selon la revendication 6, caractérisé par le fait que le moyen de blocage (11) est constitué d'un boulon de blocage (21) qui est placé au niveau de l'extrémité libre du second baladeur (17), qui est guidé verticalement dans une ouverture de passage verticale du second baladeur (17), qui comporte une tête (24) épaissie qui, dans l'état abaissé du boulon de blocage (21), est maintenue par sa forme même dans un creux correspondant du dispositif de support (7) comportant le guide transversal (16), et qui doit être soulevé par le moyen de déblocage (22) dans une position à laquelle il est mis hors prise du dispositif de support (7).

8. Elément transporteur basculant selon la revendication 7, caractérisé par le fait que la tête (24) du boulon de blocage (21) soulevé à l'aide du moyen de déblocage (22) vient en prise par l'intermédiaire du moyen de commande (10) au niveau d'un poste distributeur et doit être déplacée latéralement vers l'extérieur en emmenant le second baladeur (17).

9. Elément transporteur basculant selon la revendication 6 ou 7, caractérisé par le fait qu'un moyen de blocage (11) est agencé aux deux extrémités libres du second baladeur (17).
